# EUROPEAN PATENT APPLICATION

(11) **EP 2 218 381 A1**
(43) Date of publication of application: **18.08.2010**
(21) Application number: 10250165.7
(22) Date of filing: 01.02.2010
(51) Int. Cl.: A47J 42/04, A47J 42/50

(54) **Condiment grinder**

(30) Priority: 13.02.2009 GB 0902470
(71) Applicant: DKB Household UK Limited, Hampshire GU14 7UE (GB)
(72) Inventor: Thornton, Andrew, Hascombe Surrey GU8 4JE (GB)
(74) Representative: Jennings, Nigel Robin

(57) **Abstract**

A condiment grinder comprises a hollow body (2) constituting a reservoir for a condiment to be ground, the body (2) having an opening at its lower end, in which a female grinding member (6) defining an aperture is received and an opening at its upper end. One end of an actuating rod (10) is connected to a male grinding member (8) rotatably received in the aperture and the other end of the actuating rod (10) passes through the upper opening in the body (2). A rotatable actuating knob (12) removably closes the upper opening in the body and is non-rotatably secured to the other end of the actuating rod (12). The grinder further includes a condiment filling aid comprising a tubular sleeve (20) having a first end whose cross-sectional area is less than that of its second end. The first end is connected to the upper end of the body (2) around the upper opening. The tubular sleeve (20) is movable between a retracted position, in which the second end is situated at a level not substantially above the level of the upper opening, and an extended position, in which the second end is situated substantially above the level of the upper opening. When the actuating knob (12) is removed, condiment may be introduced through the upper opening of the tubular sleeve (20) into the hollow body (20).

## Description

The present invention relates to condiment grinders, particularly pepper grinders and salt grinders for domestic and culinary use, and is concerned with that type of grinder which comprises a hollow body constituting a reservoir for a condiment to be ground, the body having an opening at its lower end, in which a female grinding member defining an aperture is received, and an opening at its upper end, an actuating rod, of which one end is connected to a male grinding member rotatably received in the aperture and the other end passes through the upper opening in the body, and a rotatable actuating knob, which removably closes the upper opening in the body and is non-rotatably secured to the other end of the actuating rod.

Such condiment grinders, which are widely used, typically have a relatively slender, tubular body, the upper open end of which is relatively small. It is not uncommon for the tubular grinder body to be of upwardly decreasing cross-sectional area for aesthetic reasons and the opening at the top of the body may therefore have a diameter as small as 15mm or even less. When it is desired to fill or refill the hollow body with a condiment to be ground, the rotatable actuating knob is removed and the condiment, which is typically in granular or particle form, e.g. peppercorns, must then be poured or otherwise introduced into the hollow body through the upper opening. However, the condiment is typically dispensed from a relatively large container and must be poured from that container into what is in practice generally quite a small opening. The result of this more often than not is that whilst a proportion of the condiment enters the hollow body, a significant proportion fails to pass through the upper opening and is thus spilt on the adjacent floor or work surface. Some users may make their own improvised funnel, e.g. from a sheet of paper, in order to direct the condiment through the opening at the top of the hollow body in order to minimise wastage and contamination of the condiment but this is in practice very unsatisfactory.

It is therefore the object of the present invention to provide a condiment grinder in which the problem outlined above is eliminated or at least minimised.

In accordance with the present invention, a condiment grinder of the type referred to above is characterised by a condiment filling aid comprising a tubular sleeve having a first end whose cross-sectional area is less than that of its second end, the first end being connected to the upper end of the body around the upper opening, the tubular sleeve being movable between a retracted position, in which the second end is situated at a level not substantially above the level of the upper opening, and an extended position, in which the second end is situated substantially above the level of the upper opening and, after removal of the actuating knob, condiment may be introduced through it into the hollow body.

Thus the condiment grinder in accordance with the invention has a filling aid permanently attached to it which effectively constitutes a funnel. The upper end of this funnel has a cross-sectional area significantly bigger than that of the upper opening in the hollow body and the introduction of condiment into the hollow body is therefore significantly easier and wastage or contamination of the condiment is therefore eliminated or at least substantially reduced. However, it would not be possible for a rigid funnel to be permanently attached to the upper end of the hollow body, firstly because this would not be practical in view of the presence of the rotatable actuating knob and secondly because this would be aesthetically unacceptable. Accordingly, the filling aid is so constructed that it may be moved between a retracted position and an extended position. In the retracted position, the larger end of the funnel is situated at a level not substantially above the level of the upper opening and the height of the filling aid in the axial direction of the grinder is therefore relatively small. Although the funnel will of course project radially beyond the upper opening in the hollow body, the visual impact of this is minimised by its very small height. In the extended position, the funnel extends upwardly from the upper opening in the body and presents an inlet opening which is significantly larger than the upper opening in the body, thereby facilitating the introduction of condiment into the body.

The tubular sleeve constituting the funnel may be movable between the retracted and extended positions by virtue of a number of different mechanisms. Thus in one simple embodiment, the tubular sleeve may be made of semi-rigid, resilient material, such as rubber or elastomeric material, and may be simply inverted against its resilience from its upstanding, extended position to a retracted position in which it extends downwardly around the upper end of the hollow body. Thus in one embodiment of the invention the tubular sleeve is made of flexible material and is movable between the retracted and extended positions by virtue of its flexibility. In an alternative embodiment, two or more annular lines of reduced thickness or preformed fold lines are formed in the tubular sleeve, which is then movable between the retracted and extended positions by relative rotation of the portions of the tubular sleeve on the two sides of each line. Thus in this embodiment the tubular sleeve is moved into the retracted position essentially by folding it in the manner of a concertina, that is to say with the sense of each fold being opposite to that of the or each adjacent fold.

Further features and details of the invention will be apparent from the following description of one specific embodiment which is given by way of example only with reference to the accompanying drawings, in which:
Figure 1 is a side view of a condiment grinder in accordance with the invention;
Figure 2 is an axial sectional view on the line A-A in Figure 1;
Figure 3 is a view similar to Figure 1 showing the grinder in exploded form, that is to say after removing the fastening nut from the top of the actuating rod; and
Figure 4 is an axial sectional view corresponding to Figure 2 on the line B-B in Figure 3.

The grinder includes a hollow body 2 constituting a reservoir for a condiment, such as peppercorns, to be ground. This hollow body is effectively an openended tube and may be made of any desired material, though transparent plastic material, such as polycarbonate, is preferred. The opening at the lower end of the body 2 is closed, in this case by a closure plug 4 defining a central aperture. Fixedly received in this aperture is an annular, female grinding member 6 affording a central aperture. Rotatably received within the latter aperture is a male grinding member 8, which is non-rotatably connected to an actuating rod 10 of non-circular, preferably rectangular, section, which extends upwardly along the axis of the tubular body 2 and projects out of the opening at the upper end of the body 2. Received on top of the body 2 is a hollow actuating knob 12, extending through whose upper wall is a hole 14 of non-circular cross-section matching that of the actuating rod 10. The actuating rod 10 passes through the hole 14 and is thus non-rotatably connected to the actuating rod 12 by virtue of the cooperating non-circular cross-sections of the rod 10 and the hole 14. The uppermost portion of the rod 10 carries an external screw thread, in mesh with which is an internal screw thread formed on the surface of a blind hole 16 formed in a fastening nut 18.

As thus far described, the condiment grinder is conventional. In order to use the grinder, the actuating knob 12 is manually rotated with respect to the body 2 and this rotation is transmitted to the actuating rod 10 and thus also to the male grinding member 8. Condiment within the reservoir constituted by the body 2 is ground into fine particles within the gap defined by the two grinding members and falls out of the opening at the bottom of the body 2.

In accordance with the invention, the condiment mill also includes a filling aid. This is in the form of a tubular sleeve or gaiter 20 of resilient, flexible material, which is preferably rubber or elastomeric material and in this case is silicone rubber. The sleeve 20 is of generally funnel shape, that is to say of progressively decreasing cross-sectional area in the downward direction. Its lower end of smaller diameter is connected to the exterior of the upper end of the tubular body 2 and thus surrounds the upper opening of the body 2. The connection of the sleeve 20 to the body 2 may be effected in various ways but in this case is effected in part by adhesive between the inner surface of the lower end of the sleeve 20 and the outer surface of the upper end of the body 2 and in part also by the provision of an encircling band of metal 22, which can be of stainless steel or chrome-plated steel in order to add to the aesthetic appeal of the grinder. As will be seen, the upper end of the body 2 is of reduced thickness on its external surface and thus affords an upwardly directed shoulder on which the lower end of the sleeve 20 and the metallic band 22 rest. The reduction in thickness of the upper end of the body 2 is equal to the sum of the thicknesses of the lower end of the sleeve 20 and of the metallic band 22 which means that the outer surface of the band 22 is substantially flush with that of the body 2. The sleeve 20 is provided with a number, in this case 2, of annular lines 24, 26 of reduced thickness, which constitutes predetermined fold lines. Secured to the external surface of the upper end of the sleeve 20 is a further metallic band 28, whose appearance is similar to that of the band 22 and is provided primarily for decorative reasons, though it also enhances the mechanical rigidity of the upper edge of the sleeve 20 and thus enables the upper edge of the sleeve 20 to be grasped repeatedly by the fingers of a user without suffering any damage.

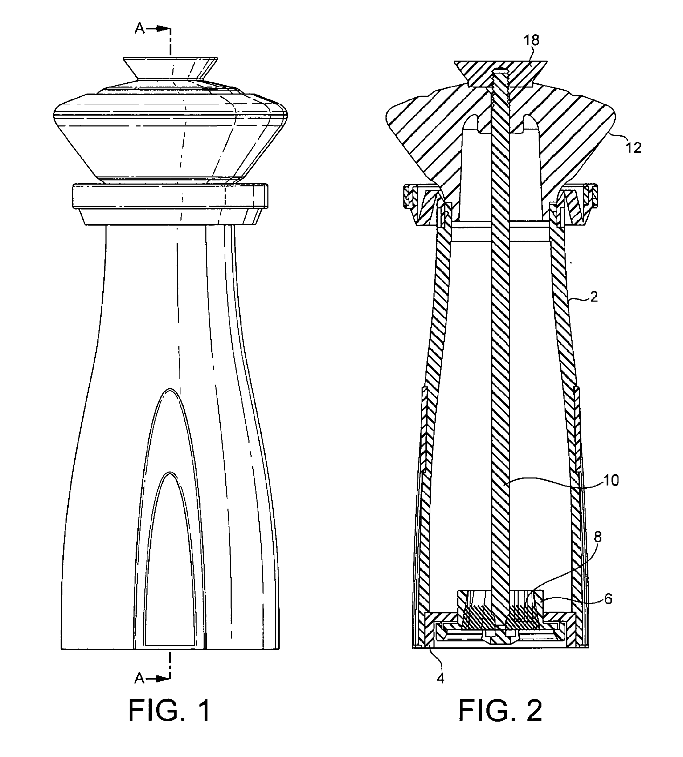

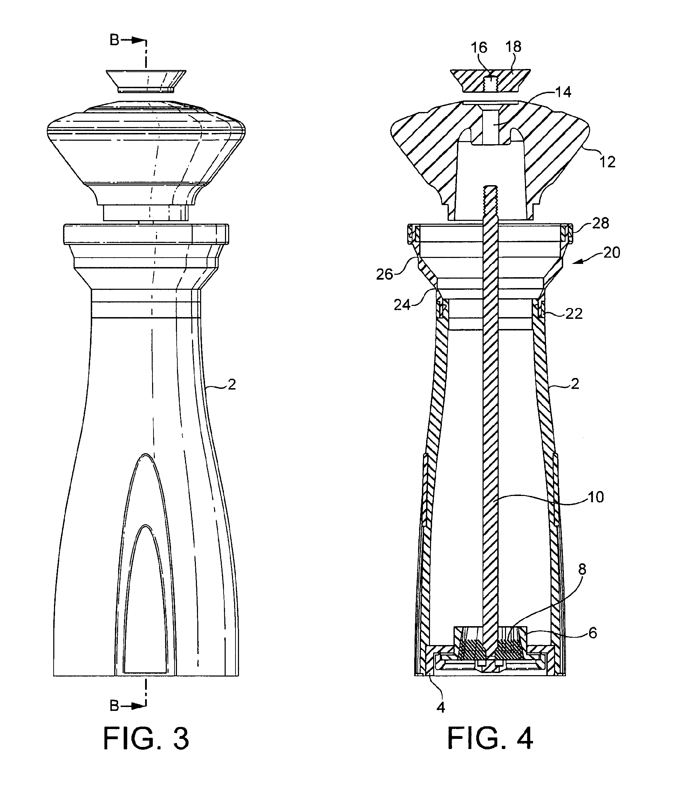

As a result of the provision of the fold lines 24, 26, the sleeve 20 is movable between two configurations. In the extended configuration shown in Figure 4, the sleeve 20 extends upwardly from the upper end of the body 2 and affords an upper opening whose area is significantly greater than that of the opening at the top of the body 2. In this embodiment, the extended configuration of the sleeve 20 can only be achieved after removal of the actuating knob 20 but it would be possible for the knob 20 to be shaped and dimensioned such that the sleeve 20 could be moved into its extended position without removing the knob 12, though it will be appreciated that there would be no functional benefit in this possibility because condiment can in any event not be introduced through the sleeve 20 into the body 2 without first removing the knob 12. After filling of the body 2 has been completed with the sleeve 20 in the extended position shown in Figure 4, the sleeve 20 is moved into its retracted position. This is achieved simply by the application of a downward manual force on the upper edge of the sleeve 20. When this force is applied, the sleeve folds at the lines 24 and 26 in the manner of a concertina and thus moves into its retracted configuration shown in Figure 2. In this retracted configuration, the upper edge of the sleeve 20 is situated at a level which is not significantly above that of the upper edge of the body 2. The actuating knob 12 is then placed over the actuating rod 10, which is passed through the hole 14. The retaining nut 18 is then screwed onto the top of the actuating rod 10 in order to retain the actuating knob 12 firmly in position. In the retracted position of the sleeve 20, it does of course project an appreciable distance radially beyond the upper end of the body 2 but its extent in the axial direction is very limited. The actuating knob 12 has a diameter which is significantly larger than that of the upper end of the sleeve 20 and the sleeve is therefore invisible when the grinder is viewed from above in the axial direction. The sleeve is of course visible when the grinder is viewed from the side but its small axial extent coupled with the provision of the decorative band 28 results in the sleeve overall enhancing the aesthetic appeal of the grinder.

On the next occasion that it is desired to refill the grinder, the steps referred to above are performed in the reverse order. Thus the fastening nut 18 is unscrewed and the actuating knob 12 is then removed. The upper edge of the sleeve 20 is then grasped manually and pulled upwardly. This results in unfolding movement in opposite directions about the two fold lines 24, 26 and the sleeve thus moves back into the extended position shown in Figure 4. A condiment is then introduced into the upper end of the sleeve 20 and thus into the body 2 and the relatively large cross-sectional area of the upper end of the sleeve 20 means that the introduction of condiment into it without wastage or contamination of a proportion of the condiment is therefore a simple matter.

## Claims

1. A condiment grinder comprising a hollow body constituting a reservoir for a condiment to be ground, the body having an opening at its lower end, in which a female grinding member defining an aperture is received, and an opening at its upper end, an actuating rod, of which one end is connected to a male grinding member rotatably received in the aperture and the other end passes through the upper opening in the body, and a rotatable actuating knob which removably closes the upper opening in the body and is non-rotatably secured to the other end of the actuating rod, **characterised by** a condiment filling aid comprising a tubular sleeve having a first end whose cross-sectional area is less than that of its second end, the first end being connected to the upper end of the body around the upper opening, the tubular sleeve being movable between a retracted position, in which the second end is situated at a level not substantially above the level of the upper opening, and an extended position, in which the second end is situated substantially above the level of the upper opening and, after removal of the actuating knob, condiment may be introduced through it into the hollow body.

2. A grinder as claimed in Claim 1 in which the tubular sleeve is made of flexible material and is movable between the retracted and extended positions by virtue of its flexibility.

3. A grinder as claimed in Claim 1 or 2 in which two or more annular lines of reduced thickness are formed in the tubular sleeve, which is movable between the retracted extended positions by relative rotation of the portions of the tubular sleeve on the two sides of each line of reduced thickness.
